# EUROPEAN PATENT APPLICATION

(11) **EP 1 524 668 A2**
(43) Date of publication of application: **20.04.2005**
(21) Application number: 04023677.0
(22) Date of filing: 05.10.2004
(51) Int. Cl.: G11B 27/10, G11B 19/00

(54) **Information reproducing apparatus and information reproducing method**

(30) Priority: 17.10.2003 JP 2003358093
(71) Applicant: Pioneer Corporation, Tokyo-to (JP)
(72) Inventor: Naohara, Shinichi, Yamada Kawagoe-shi Saitama-ken (JP); Yoshida, Masao, Yamada Kawagoe-shi Saitama-ken (JP); Sasaki, Takashi, Yamada Kawagoe-shi Saitama-ken (JP); Okamoto, Yasuhisa, Yamada Kawagoe-shi Saitama-ken (JP); Matsuo, Kazunori, Yamada Kawagoe-shi Saitama-ken (JP)
(74) Representative: Tappe, Hartmut

(57) **Abstract**

An information reproducing apparatus comprises: a reproducing device which reproduces program information recorded on a recording medium (2); and a control device (18) which, when a user's instruction is necessary at the time of reproducing said program information, requests the user to input the necessary instruction, waits for the instruction from the user and, controls reproducing operation of said reproducing device in response to the instruction from the user at the time of input of the instruction. The control device(18) determines whether sound information desired by the user is included in said program information or not and, when it is determined that the sound information is included in the program information, controls the reproducing operation of said reproducing device in accordance with a preset reproducing procedure without waiting for said instruction input from said user.

## Description

### BACKGROUND OF THE INVENTION

### Field of the Invention

The present invention relates to a technical field of an information reproducing apparatus and so on including: a reproducing device which reproduces program information recorded on a recording medium; and a control device, when an instruction of the user is necessary at the time of reproducing the program information, which requests the user to input the necessary instruction and controls reproducing operation of the reproducing device in accordance with the instruction input at the time of the instruction input from the user.

### Description of the Related Art

In recent years, an information reproducing apparatus is being spread. In the information reproducing apparatus, a plurality of optical discs (recording media) such as a CD (Compact Disc) on which sound information such as music is recorded and optical discs such as a DVD (Digital Versatile Disc) on which not only sound information but also video information is recorded are housed in the same disc housing. An optical disc is automatically changed by a disc changer and is reproduced, in accordance with the instruction from a user.

Optical discs such as DVDs (DVD-Video, DVD-Audio, and the like) and video CDs carrying video information, on which menu screen data for requesting the user for an operation selection instruction is recorded, are known. An information reproducing apparatus in which such an optical disc is loaded displays a menu screen on a monitor before reproduction of recorded information and, when the user inputs a selection instruction via the menu screen, starts reproducing the optical disc. Consequently, the user can select, for example, favorite music on the menu screen and then reproduce it, or select a sound format or a sub title (caption) in accordance with the his/her preference and, then reproduce music.

However, if the user has to input a selection instruction on a menu screen each time an optical disc is changed in the information reproducing apparatus by the user or changed by the disc changer, in some cases, operation is troublesome for the user. For example, if a menu screen is displayed on an information reproducing apparatus mounted on a vehicle or the like, in some cases, the user cannot see and operate it during driving for safety.

As a technique solving such a problem, Japanese Patent Application Laid-open No. 2002-230891 discloses an information reproducing apparatus which performs a proxy process of automatically performing reproducing operation corresponding to an operational procedure desired by the user by comparing operation item information obtained from an optical disc with information of setting conditions of reproducing operation which is preset by the user without the operation selection instruction from the user (hereinbelow, called "automatic proxy process").

Whether the automatic proxy process in the conventional information reproducing apparatus is executed or not is set by the user. Consequently, if the automatic proxy process is set to be executed, there is inconvenience such that the process is executed irrespective of optical discs including an optical disc (namely, contents) for which the user desires to input an instruction and an optical disc for which the user does not desire to input an instruction.

For example, in the case where the user does not wish to input an instruction only to an optical disc on which desired sound information (for example, music such as pop music) is recorded but wishes to input an instruction to the other optical discs, the user has to change the setting each time the optical disc is changed. As the information reproducing apparatus in which an optical disc is automatically changed by a disc changer and reproduced is being spread, it becomes more inconvenient.

### SUMMARY OF THE INVENTION

An object of the invention is to provide an information reproducing apparatus and an information reproducing method aiming at solving the inconvenience and capable of reproducing sound information desired by the user without waiting for input of any instructions from the user even in the case where the instruction of the user is necessary at the time of reproduction.

To solve the inconvenience, the invention according to claim 1 relates to an information reproducing apparatus comprising:
a reproducing device which reproduces program information recorded on a recording medium; and
a control device which, when a user's instruction is necessary at the time of reproducing said program information, requests the user to input the necessary instruction, waits for the instruction from the user and, controls reproducing operation of said reproducing device in response to the instruction from the user at the time of input of the instruction,
wherein said control device determines whether sound information desired by the user is included in said program information or not and, when it is determined that the sound information is included in the program information, controls the reproducing operation of said reproducing device in accordance with a preset reproducing procedure without waiting for said instruction input from said user.

The invention according to claim 13 relates to an information reproducing method, comprising the processes of: when a user's instruction is necessary at the time of reproducing program information recorded on a recording medium, requesting the user to input the necessary instruction, waiting for the instruction from the user, and when the instruction is input, reproducing said program information in accordance with the instruction, comprising the processes of:
determining whether sound information desired by the user is included in said program information or not and, when it is determined that said sound information is included in the program information, reproducing said program information in accordance with a preset reproducing procedure without waiting for said instruction input from said user.

The invention according to claim 14 relates to a recording medium on which information reproduction processing program is computer-readably recorded,
said information reproduction processing program making a computer which requests the user to input a necessary instruction when the user's instruction is necessary at the time of reproducing program information recorded on a recording medium, waits for the instruction from the user and, when the instruction is input, reproduces said program information in accordance with the instruction, function so as to determine whether sound information desired by the user is included in said program information or not and, when it is determined that said sound information is included in the program information, reproduce said program information in accordance with a preset reproducing procedure without waiting for said instruction input from said user.

### BRIEF DESCRIPTION OF THE DRAWINGS

FIG. 1 is a diagram showing an example of a logical recording format of a DVD;
FIG. 2 is a schematic block diagram showing an information reproducing apparatus according to an embodiment of the invention;
FIG. 3 is a flowchart showing reproducing process of an information reproducing apparatus S in a first embodiment;
FIG. 4 is a conceptual diagram showing an example of information stored in a database for searching information;
FIG. 5 is a flowchart showing reproducing process of an information reproducing apparatus S in a second embodiment;
FIG. 6 is a flowchart showing reproducing process of an information reproducing apparatus S in a third embodiment; and
FIG. 7 is a flowchart showing reproducing process of an information reproducing apparatus S in a fourth embodiment.

### DETAILED DESCRIPTION OF THE PREFERRED EMBODIMENTS

Preferred embodiments of the invention will be described hereinbelow with reference to the drawings. The following embodiments relate to a case where the invention is applied to an information reproducing apparatus which reproduces information recorded on a DVD-Video (hereinbelow, simply called "DVD") as an example of a recording medium. The information reproducing apparatus may be mounted on, for example, a vehicle or installed for home use or commercial use.

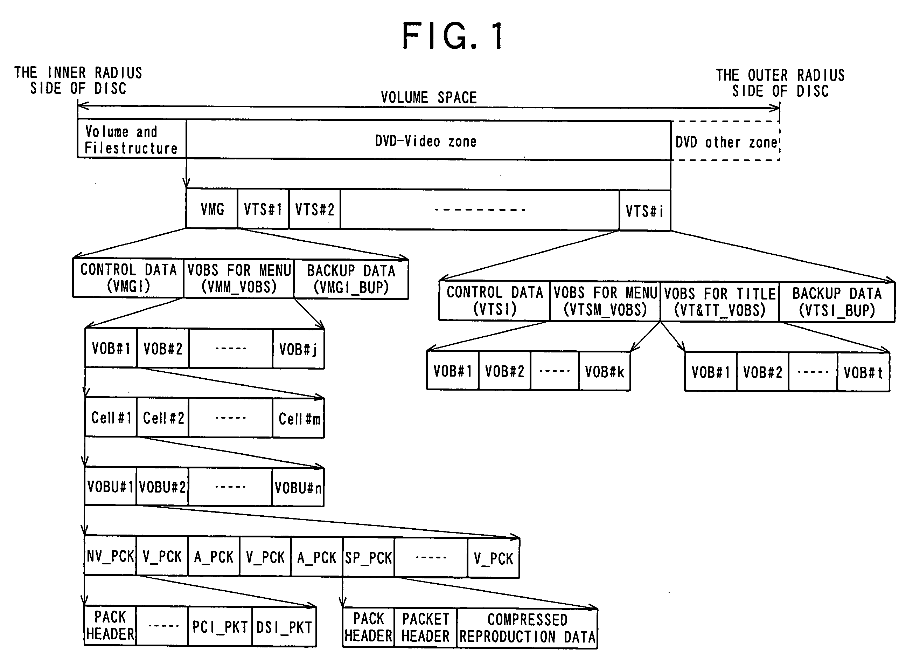

First, a logical recording format of a DVD will be described with reference to FIG. 1. FIG. 1 is a diagram showing an example of the logical recording format of a DVD.

A volume space of a DVD is roughly divided into: a lead-in area (a volume and file structure in which control information of a logic format conformed with both the UDF (Universal Disc Format) standard and the ISO9660 standard, or the like is recorded) ; a DVD-video zone; and, the other DVD zone. The DVD-video zone is a data storage area for recording contents-data as program information. All of information necessary to reproduce contents-data is also stored (recorded) in the DVD-video zone. In the lead-in area, information such as DVD manufacture information, information of a contents-supplier, a disc key specific to the DVD, and the like is also stored.

Further, the DVD-video zone is constructed by one video manager VMG and 1 to 99 video title sets VTS#1 to VTS#i.

The video manager VMG is constructed by a video obj ect set for VMG menu (VMGM_VOBS) as the entity of a reproduction stream, video manager information VMGI as control information indicative of program chain information PGCI regarding a method of reproducing the video object set for VMG menu (VMGM-VOBS), a reproduction stream attribute, and the like, and backup data of the video manager information VMGI (VMGI_BUP).

Each of the video title sets VTS#1 to VTS#i is constructed by a video object set for VTS menu (VTSM_VOBS) as the entity of a reproduction stream, a video object set for video title (VTSTT_VOBS), video title set information VTSI as control information indicative of program chain information PGCI regarding a method of reproducing the video object set for menu (VTSM_VOBS) and a video object set for title (VTSTT_VOBS), a reproduction stream attribute and the like, and backup data of the video title set information VTSI (VTSI_BUP).

The video title set VTS is a set of titles (each title corresponds to one production to be presented to the audience by the producer of a movie or the like) which are related to each other (having the same attributes such as sound, the number of streams of a sub picture, specifications, and corresponding languages and so on). More concretely, for example, plural movies in different-language words of the same movie are recorded with different titles, or a movie of a theater version and a movie of a special version of the same movie are recorded with different titles.

Each of the information VMGM_VOBS, VTSM_VOBS, and VTSTT_VOBS is constructed by one or more video objects (VOB) VOB#1 to VOB#j, VOB#1 to VOB#k, and VOB#1 to VOB#t, respectively. Each of the video objects is constructed by a plurality of cells.

The cell is a reproduction unit of real-time data. The video manager VMG or video title set VTS may include a plurality of cells, and the order of reproduction of cells is designated by the program chain information PGCI.

The functions of the program chain information PGCI will be described in more detail. A plurality of pieces of the program chain information PGCI may be included in the video manager VMG or each of the video title sets VTS, and the program chain information PGCI is information indicative of a unit of process for designating the order of reproducing cells. Information used to reproduce a cell and then a still picture (called "still cell") in a temporal still state, and information used to reproduce the video object unit (VOBU) and then a still picture (called "VOBU still picture") in a temporary still state may also be preliminarily recorded so as to be included in the program chain information PGCI. For convenience of description, cells #1 to #m in the video manager VMG are representatively shown in FIG. 1.

In each of the information VMGM_VOBS, VTSM_VOBS, and VTSTT_VOBS, information regarding a menu screen for urging the user, operator, manufacturer, or the like (hereinbelow, simply called "user") to input an instruction necessary for reproducing contents-data (for example, operation instruction, selection instruction, or the like) can be recorded.

In each of the information VMGM_VOBS, VTSM_VOBS, and VTSTT_VOBS, it is not always necessary to recordmenu screen data and the like. In the case of a DVD in which the menu screen data or the like is not preliminarily recorded, a menu screen based on the menu screen data or the like is not displayed. In the DVD-Video standard, the information reproducing apparatus pseudo-generates menu screen data in correspondence with each of video objects VOB in the video title sets VTS#1 to VTS#i, and can display a pseudo menu screen on the basis of the image data.

Referring again to FIG. 1, each of the cells (represented by the cell #1) is constructed by a plurality of video object units (VOBU) VOBU#1 to VOBU#n. Further, each of the video object units (represented by VOBU#1) is constructed by a navigation pack NV_PCK always provided at the head, and a video pack V_PCK, an audio pack A_PCK, and a sub-picture pack SP_PCK which are time-divisionally provided as necessary.

Video (image) information is recorded in the video pack V_PCK and sound information is recorded in the audio pack A_PCK. The sound information is compressed in, for example, the Dolby digital (trademark) (AC-3) form and recorded, or is recorded as non-compressed sound information in the linear PCM form.

The sub-picture pack SP_PCK is constructed by a pack header and reproduction data (compressed reproduction data) compressed and recorded.

In the sub-picture pack SP_PCK, video information concerning a frame, an operation selection item (button), and the like necessary for constructing and displaying a menu screen is recorded as sub-picture data.

The navigation pack NV_PCK is constructed by a presentation control information packet PCI_PKT subsequent to the pack header or the like and a data search information packet DSI_PKT.

In the presentation management information packet PCI_PKT and data search information packet DSI_PKT in the navigation pack NV_PCK, and compressed reproduction data in the sub-picture pack SP_PCK, information regarding operation selection items to be displayed on the menu screen (for example, selection items such as "reproduction of main part", "chapter selection", "music piece selection", and "caption setting", a selectable music piece name display item, a chapter number display item, and the like) is recorded. The information concerning the operation selection items is information for presetting a method of displaying the operation selection items when the operation selection items are displayed on the menu screen (display area and position), button number information assigned to each of the operation selection items (by the information, the system controller 18 recognizes an operation selection item selected), and highlight information defining display and operation when the operation selection item is selected, and so on.

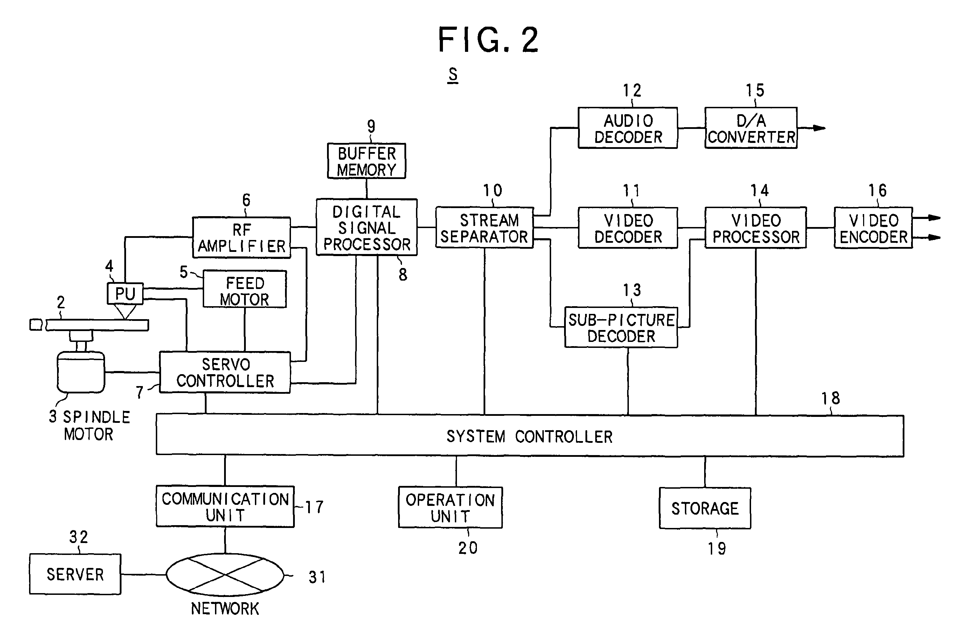

Referring now to FIG. 2, the configuration and functions of the information reproducing apparatus according to the embodiment will be described. FIG. 2 is a schematic block diagram of the information reproducing apparatus according to the embodiment.

As shown in FIG. 2, the information reproducing apparatus S includes a spindle motor 3 for rotating an optical disc (for example, a DVD 2) loaded in a predetermined clamp position at constant linear velocity (or angular velocity), an optical pickup 4 for optically reading information recorded on the optical disc and photoelectrically converting the information to an electric signal, a feed motor 5 for moving the optical pickup 4 in the radial direction of the optical disc, an RF amplifier 6, a servo controller 7, a digital signal processor 8, a buffer memory 9, a stream separator 10, a video decoder 11, an audio decoder 12, a sub-picture decoder 13, a video processor 14, a D/A converter 15, a video encoder 16, a communication unit 17, a system controller 18 as a control device of the invention, a storage 19, and an operation unit 20. In such a configuration, the spindle motor 3, optical pickup 4, feed motor 5, RF amplifier 6, servo controller 7, digital signal processor 8, buffer memory 9, and the like function as a reproduction device which reproduces contents-data recorded on an optical disc under control of the system controller 17. A plurality of optical discs are housed in a not-shown disc housing, and any of the optical discs is selected by a disc changer and loaded in the predetermined clamp position.

The RF amplifier 6 generates a RF (Radio Frequency) signal from an electric signal output from the optical pickup 4 and outputs the RF signal to the digital signal processor 8. The RF amplifier 6 also generates various error signals such as a tracking error signal, a focus error signal based on the electric signal, and outputs them to the servo controller 7.

The servo controller 7 performs servo control (focus servo, tracking servo, rotation servo, carriage servo, and the like) for the spindle motor 3, optical pickup 4, and feed motor 5 on the basis of the various error signals from the RF amplifier 6 and a synchronization error signal detected by the digital signal processor 8 in accordance with an instruction of the system controller 18.

The digital signal processor 8 A/D-converts an RF signal from the RF amplifier 6, and then performs a signal demodulating process and an error correcting process conforming with the DVD-Video standard, and temporarily stores the processed signal into the buffer memory 9. In accordance with an instruction from the system controller 18, the stored demodulated data is output to the stream separator 10 and the system controller 18, and a synchronization error signal obtained by the demodulation and error correcting processes is supplied to the servo controller 7.

The video manager information VMGI and the video title set information VTSI shown in FIG. 1 is also supplied together with the demodulated data from the digital signal processor 8 to the system controller 18. Consequently, the system controller 18 obtains control information for displaying the menu screen mentioned above.

The stream separator 10 separates and extracts the navigation pack NV_PCK, video pack V_PCK, audio pack A_PCK, and sub-picture pack SP_PCK included in the video object unit VOBU from the demodulated data supplied from the digital signal processor 8. The separated and extracted navigation pack NV_PCK, video pack V_PCK, audio pack A-PCK, and sub-picture pack SP_PCK are supplied to the system controller 18, the video decoder 11, the audio decoder 12, and the sub-picture decoder 13, respectively.

By the supply of the navigation pack NV_PCK, at the time of reproducing a video stream and an audio stream, the system controller 18 obtains information regarding the operation selection items included in the presentation control information packet PCI_PKT.

The video decoder 11 performs a predetermined decoding process for the video pack V_PCK and outputs the decoded video data to the video processor 14.

In the case where sound information is compressed and recorded in the Dolby digital (AC-3) form, the audio decoder 12 generates digital audio data by performing the predetermined decoding (decompressing) process for the audio pack A_PCK, and outputs the digital audio data to the D/A converter 15. On the other hand, in the case where sound information is recorded as non-compressed sound information in the linear PCM form, the audio decoder 12 outputs the sound information to the D/A converter 15 without performing the decompressing process.

The D/A converter 15 converts digital audio data output from the audio decoder 12 to an analog audio signal in the audio frequency band, and outputs the analog audio signal.

The sub-picture decoder 13 performs the predetermined decoding process for the sub-picture pack SP_PCK, thereby generating the sub-picture data, and outputs the sub-picture data to the video processor 14. Further, at the time of generating the sub-picture data, the sub-picture decoder 13 also decodes the sub-picture position data indicative of the position of the sub-picture, and supplies the resultant to the system controller 18.

According to an instruction from the system controller 18, the video processor 14 generates image data from the video data supplied from the video decoder 11, and outputs the image data to the video encoder 16. By combining the video data and sub-picture data supplied from the video decoder 11 and the sub-picture decoder 13, image data is generated and is output to the video encoder 16. The video processor 14, in accordance with an instruction from the system controller 18, generates menu image data from the sub-picture data supplied from the sub-picture decoder 13 and the information regarding the operation selection items supplied from the system controller 18, and outputs the generated data to the video encoder 16.

The video encoder 16 converts image data to digital video data and a composite signal which can be displayed on a monitor, and outputs the resultant. The video encoder 16 supplies the digital video data and the composite signal to a monitor (not shown) , thereby displaying contents such as a movie or a menu screen for urging the user to select an operation selection item on the display screen of the monitor.

The communication unit 17 is connected to a server 32 having a database for information search, which is connected to a network 31 such as the Internet, and performs data communication with the server 32 in accordance with an instruction from the system controller 18. When information (signal) to be transmitted from the system controller 18 is input, the communication unit 17 executes a preset output interface process for the signal, and outputs the resultant signal to the server 32 via the network 31. The communication unit 17 executes a preset input interface process for the information (signal) transmitted from the server 32 via the network 31, and outputs the resultant to the system controller 18.

The system controller 18 includes a CPU having the computing function, a RAM for work, and a ROM for storing various process programs (including an information reproducing process program which may be downloaded from a server in the Internet, or provided by being recorded on a recording medium such as a CD-ROM) and data, and the like. To the system controller 18, the operation unit 20 used by the user to input a desired operation instruction, and the storage 19 as a nonvolatile memory for storing information are connected. By executing a program stored in the ROM, the system controller 18 as a computer executes centralized-control of the whole information reproducing apparatus S, and also functions as a control device of the invention.

Concretely, when an instruction of the user is necessary at the time of reproducing contents-data recorded on the DVD 2 (for example, when recording or setting is made for displaying a menu screen before reproduction of contents-data), the system controller 18 as a control device of the invention displays, for example, a menu screen on the display screen of the monitor, requests the user to input the necessary instruction (for example, an instruction of selecting an operation selection item), waits for an instruction from the user and, when the instruction is input, executes a process of controlling reproducing operations of the components such as the optical pickup 4 in order to reproduce the contents-data in accordance with the instruction.

That is, the system controller 18 continues waiting until an operation selection item is selected by the user via the operation unit 20 at the time of displaying the menu screen and, when the user operates the operation unit 20 to give an instruction of selecting the title of a desired music piece in the operation selection items, the system controller 18 controls so as to reproduce contents-data (sound information, video information, and the like) concerning the music piece title (hereinbelow, called "instruction input skip reproduction").

Under such control, the system controller 18 determines whether sound information desired by the user is included in contents-data or not. In the case where it is determined that the sound information is included in the contents-data, without waiting for the instruction input from the user, the system controller 18 executes a process of controlling the reproducing operation of components such as the optical pickup 4 so as to reproduce (continuous reproduction as reproduction performed without a user's instruction input) contents-data in accordance with a preset reproducing procedure (so as to reproduce, for example, music piece information in order of numbers).

The "sound information desired by the user" includes sound information such as music, comic chat, and comic storytelling which can be enjoyed without video images like a video clip (music video) or movie music.

Determination of "whether sound information is included in contents-data or not" (hereinbelow, called "sound information presence/absence determination") is made in either the case where external information (information other than information recorded on the DVD 2) is used or the case where internal information (information recorded on the DVD 2) is used.

As an example of the case where external information is used, the sound information presence/absence determination is made with reference to (by obtaining information from) a database for information search in which identification information corresponding to contents-data and information indicative of the contents of the contents-data are stored by being associated with each other. The identification information corresponding to contents-data is information for specifying (identifying) the contents-data. Examples of the identification information are video manager information VMGI, DVD manufacture information, information of the contents supplier, and disk key (in a CD, the identification information corresponds to TOC information). Any information can be used as long as the contents-data recorded in the DVD 2 can be specified.

The database for information search may be constructed in the storage 19 in the information reproducing apparatus S or provided in the server 32 (constructed in a storage in the server 32). The database for information search may be constructed by the user, an information provider, or the like. In the case where the database for information search is constructed by the user, the user can set information indicative of the contents of contents-data stored in the database for information search so that desired sound information (for example, music or a specific genre in music) is reproduced.

On the other hand, as an example of the case where internal information is used, by referring to information of an average sound volume level of contents-data recorded on the DVD 2 or information indicating whether non-compressed sound information is recorded on the DVD 2 or not, the sound information presence/absence determination is made.

The determining method may be varied according to desired sound information.

The information regarding the "preset reproducing procedure" is stored in, for example, the storage 19 in the information reproducing apparatus S or the database for information search in the server 32. The system controller 18 can continuously reproduce the contents-data by referring to the reproducing procedure without requesting the user to give an instruction input (even when an operation selection item is not selected on the menu screen). Examples of the reproducing procedures include a reproducing procedure for reproducing music data in order of recording numbers from the beginning (in order of title numbers) and a reproducing procedure for selecting a predetermined item from selectable music title display items or chapter number display items and reproducing the selected item.

In the case where the reproducing procedure is peculiar to each content, information regarding the reproducing procedure is associated with identification information corresponding to contents-data and is stored in the database for information search. It means that the reproducing procedure according to each contents-data is set since the constructions of operation selection items in the menu screen may be different from each other according to contents.

The details of the process of reproducing contents-data in the information reproducing apparatus S in the embodiment will now be described.

### First Embodiment

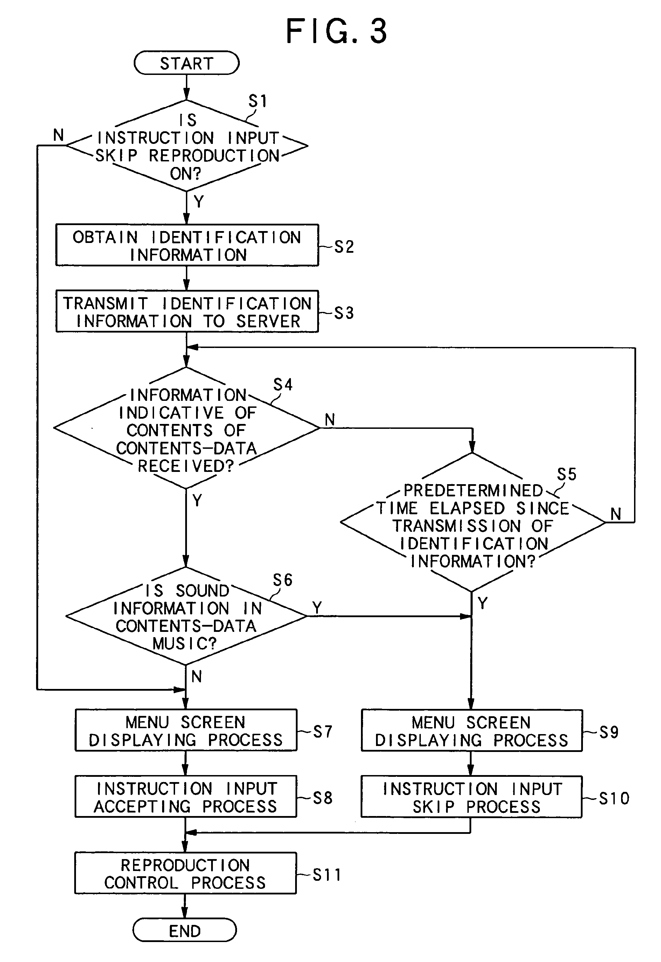

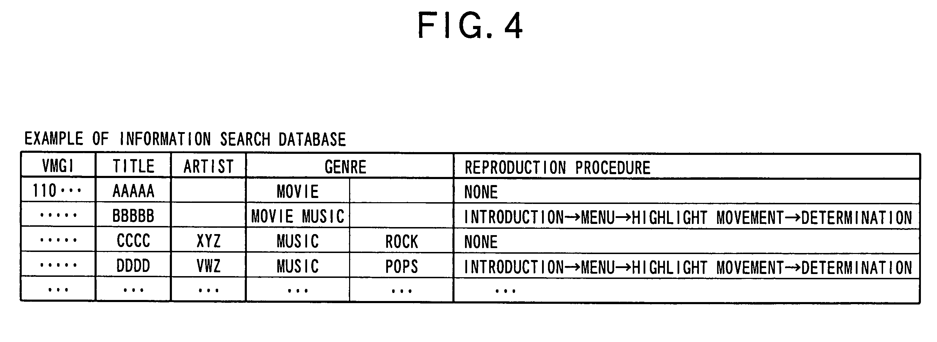

In a first embodiment, referring to FIGS. 3 and 4, reproducing process of the information reproducing apparatus S in the case where the sound information presence/absence determination is made by using external information, particularly, information stored in the database for information search in the server 32 will be described.

FIG. 3 is a flowchart showing reproducing process of the information reproducing apparatus S (system controller 18) in the first embodiment. The following process is executed, for example, when a reproducing instruction is given from the user via the operation unit 20 and control information for displaying the menu screen is obtained by the system controller 18.

In the process of FIG. 3, first, the system controller 18 determines whether instruction input skip reproduction is set to be ON or not by referring to, for example, information stored in the storage 19 (step S1). In the case where the instruction input skip reproduction is not set to be ON (N in step S1), the system controller 18 advances to step S7 and executes a menu screen display process. In the menu screen display process, as it is known, the system controller 18 outputs information regarding the operation selection items and a menu screen data generation instruction to the video processor 14 to display the menu screen on the display screen of the monitor. Subsequently, in an instruction input receiving process in step S8, the system controller 18 receives a selection instruction input of an operation selection item in the displayed menu screen from the user via the operation unit 20, stores the instruction input, and shifts to step S11.

The on/off setting of the instruction input skip reproduction, in other words, the on/off setting of whether the sound information presence/absence determination is made or not is performed by the system controller 18 as a setting device, for example, according to an operation on the operation unit 20 by the user, and the setting is stored in the storage 19.

On the other hand, when the instruction input skip reproduction is set to be ON (Y in step S1), the system controller 18 controls the optical pickup 4 and the like to obtain, for example, the video manager information VMGI (step S2). It is also possible to construct such that a plurality of kinds of identification information (disk keys or the like) is obtained.

Next, the system controller 18 accesses the server 32 connected to the network 31 via the communication unit 17 to refer to the information search database and transmits the video manager information VMGI as the obtained identification information to the server 32 (step S3). After transmission of the video manager information VMGI, the system controller 18 waits for transmission (response) of information from the server 32 for predetermined time (for example, 10 seconds) (step S5).

The server 32 receives the video manager information VMGI as transmitted identification information and searches the video manager information VMGI which, coincides with the received video manager information VMGI, by referencing the information search database.

FIG. 4 is a conceptual diagram showing an example of information stored in the information search database in the server 32. In the example of FIG. 4, the video manager information VMGI and a title as identification information corresponding to contents-data, and an artist and a genre (an example of information showing the contents of the contents-data) as information showing the contents of the contents-data are associated with each other for every content and stored. For specific contents, information indicative of a reproducing procedure is stored in association with identification information corresponding to the contents-data.

In the case where,for example, the video manager information VMGI matching the video manager information VMGI received is stored in the information search database as a result of search of the server 32, the server 32 obtains, for example, the genre corresponding to the video manager information VMGI (information indicative of contents-data) and, if any, information indicative of the reproducing procedure, and transmits it to the information reproducing apparatus S via the network 31.

When the system controller 18 receives information indicative of a genre as information indicative of the contents of contents-data and the like via the communication unit 17 (Y in step S4), the system controller 18 and makes the sound information presence/absence determination on the basis of information indicative of the genre (step S6). For example, whether the genre of sound information in the contents-data corresponding to the video manager information VMGI is music or not is determined. If the genre is music, the system controller 18 determines that sound information to be reproduced which is desired by the user is included in the contents-data (Y in step S6), and executes a process similar to the menu screen displaying process in step S7 (step S9). Subsequently, in the instruction input skip process in step S10, the system controller 18 obtains a preset reproducing procedure without waiting for instruction input from the user. For example, in the case where information indicative of the reproducing procedure is received together with information indicative of the genre in the process of step S4, the reproducing procedure is obtained. On the other hand, in the case where only the information indicative of the reproducing procedure is not received in the process in step S4, the reproducing procedure (for example, reproduction in order of title numbers) stored in the storage 19 is obtained.

In the case where it is determined in step S6 that sound information desired by the user is included in the contents-data, the menu screen displaying process is executed in step S9. Alternately, the system controller 18 may skip the menu screen displaying process in step S9 and advance to step S10 without displaying the menu screen.

On the other hand, in the process of step S5, in the case where there is no transmission (reply) of information from the server 32 for a predetermined time (in other words, a predetermined time elapsed since the video manager information VMGI has been transmitted), that is, in the case where the information indicative of the genre cannot be obtained and the sound information presence/absence determination cannot be made (Y in step S5), in a manner similar to the case where it is determined that the sound information desired by the user is included, the system controller 18 executes the processes in steps S9 and S10. The reason why the instruction input skip process is executed also in the case where the sound information presence/absence determination cannot be made is that it is considered that the user does not prefer to operate the menu screen at present (for example, the user is driving a car), in this case, since the instruction input skip reproduction is set to be ON. When the information indicative of the genre cannot be obtained and the sound information presence/absence determination cannot be made, the system controller 18 may advance to the menu screen displaying process in step S7.

In the reproduction control process in step S11 in the case where the instruction input accepting process in step S8 is executed, the system controller 18 executes process of controlling the reproducing operation of components such as the optical pickup 4 in accordance with the selection instruction of the operation selection items in the menu screen displayed on the display screen of the monitor by the menu screen displaying process.

On the other hand, in the reproduction control process in step S11 in the case where the instruction input skip process in step S10 is executed, the system controller 18 executes process of controlling the reproducing operation of the components such as the optical pickup 4 to reproduce the contents-data in accordance with the obtained reproducing procedure (for example, an operation procedure of moving a cursor of the operation selection item in the menu screen (for example, highlight movement), depressing a determination button, and starting reproduction).

In the case where, for example, a plurality of music pieces are recorded on the DVD 2 and, after the first music piece is reproduced and finished in accordance with the reproducing procedure, the menu screen display process is executed, the system controller 18 controls to execute again the instruction input skip process in step S10 so that a music piece such as the second music piece is reproduced (the control is similarly performed also in the second to fourth embodiments).

As described above, according to the first embodiment, for example, lso in the case where the instruction input of the user is necessary on the menu screen at the time of reproducing contents-data, the information search database is used, and whether sound information desired by the user is included in the contents-data or not is determined. If the sound information is included, without waiting for the instruction input from the user, the sound information desired by the user can be automatically reproduced in accordance with the preset reproducing procedure.

Therefore, also in the case where contents-data is reproduced from an optical disc such as a DVD requiring a user's instruction input at the time of reproduction, the user can handle the optical disc such as a DVD in a manner similar to, for example, a CD-DA (Digital Audio) on which music information is recorded without performing a complicated operation (for instance, during driving).

Moreover, since the sound information is automatically reproduced without waiting for the instruction input from the user only in the case where sound information desired by the user is included in the contents-data, the user does not have to give an instruction input only to an optical disk on which sound information desired by the user is recorded and can give an instruction input to the other optical discs (in other words, the user does not have to change setting of the instruction input skip reproduction each time an optical disc is changed).

### Second Embodiment

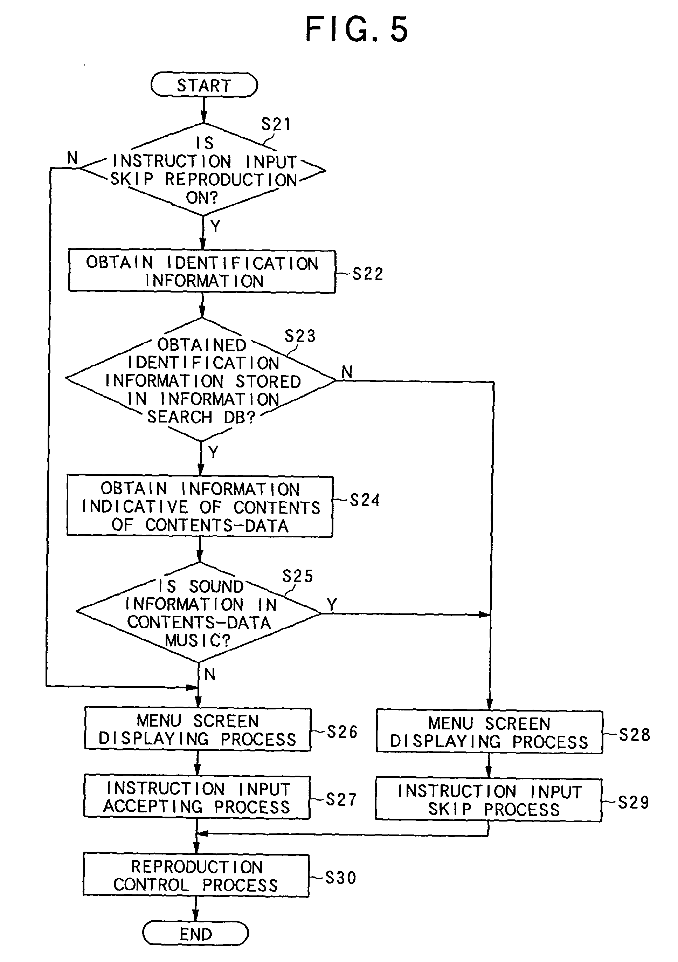

In a second embodiment, with reference to FIG. 5, reproducing process of the information reproducing apparatus S in the case where sound information presence/absence determination is made by using external information, particularly, information stored in the information search database in the storage 19 will be described. In the second embodiment, description overlapping the first embodiment will be omitted.

FIG. 5 is a flowchart showing the reproducing process of the information reproducing apparatus S (system controller 18) in the second embodiment.

Since the processes in steps S21 and S22 in FIG. 5 are similar to those in steps S1 and S2 in FIG. 3, the description will be omitted.

In process of step S23, the system controller 18 determines (retrieves) the video manager information VMGI matching the video manager information VMGI as identification information obtained in step S22 by referring to the information search database constructed in the storage 19. As a result of the retrieval, in the case where the video manager information VMGI matching the obtained video manager information VMGI is stored in the information search database (Y in step S23), for example, the system controller 18 obtains information indicative of the genre as information indicative of the contents of the contents-data corresponding to the video manager information VMGI (step S24). On the other hand, when the video manager information VMGI matching the obtained video manager information VMGI is not stored (N in step S23), that is, when the information indicative of the genre cannot be obtained and the sound information presence/absence determination cannot be made, the system controller 18 shifts to the menu screen displaying process in step S28 (in a manner similar to the first embodiment).

When the information indicative of the genre is obtained in step S24, the system controller 18 makes the sound information presence/absence determination on the basis of the information indicative of the genre (step S25). Since the process of the sound information presence/absence determination is similar to that in step S6 in FIG. 3, its description will be omitted. Also, the processes in steps S26 to S30 are similar to those in steps S7 to S11 in FIG. 3, their description will be omitted.

As described above, in the second embodiment, in a manner similar to the first embodiment, also in the case where, for example, an instruction input of the user is necessary in the menu screen at the time of reproducing contents-data, the database for information search is used, and whether sound information desired by the user is included in the contents-data or not is determined. If the sound information is included, the sound information desired by the user can be automatically reproduced in accordance with the preset reproducing procedure without waiting for the instruction input from the user.

Therefore, the user can handle an optical disk such as the DVD like a CD-DA on which, for example, music information is recorded without performing a complicated operation (for instance, during driving).

Moreover, the sound information is automatically reproduced without waiting for the instruction input from the user only in the case where sound information desired by the user is included in the contents-data, the user does not have to give an instruction input only to an optical disk on which sound information desired by the user is recorded and can give an instruction input to the other optical discs (in other words, the user does not have to change setting of the instruction input skip reproduction each time an optical disc is changed).

Further, according to the second embodiment, since the database for information search is constructed in the storage 19 in the information reproducing apparatus S, the user can operate the operation unit 20 to register the identification information corresponding to contents-data, information indicative of the contents of the contents-data, and information indicative of the reproducing procedure as associating with each other easily into the database for information search. Therefore, the user can arbitrarily set desired sound information to be subjected to the instruction input skip process.

Although an object to be determined is set as music and it is determined whether the genre of contents-data is music or not in the first and second embodiments, other music such as the genre of rock music may be an object to be determined (or an artist may be also an object to be determined). In the case where the genre of sound information in contents-data is rock music in step S6 or S25, it is determined that sound information desired by the user is included in the contents-data. An object to be determined is set by, for example, the operation unit 20 operated by the user. By storing the information in the storage 19, sound information further desired by the user can be reproduced without waiting for instruction input from the user.

### Third Embodiment

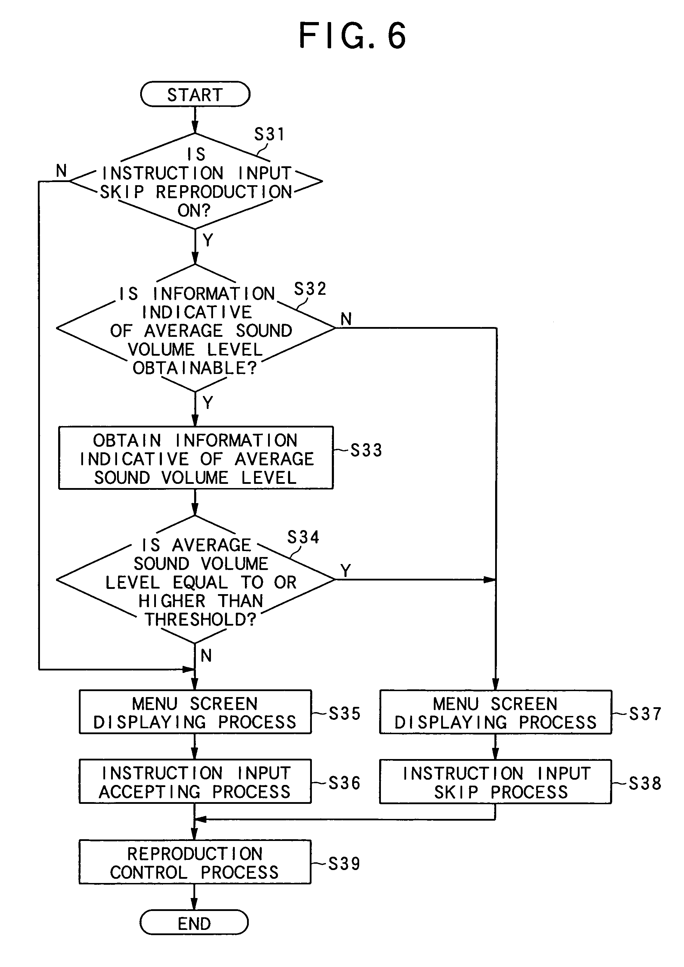

In a third embodiment, referring to FIG. 6, reproducing process of the information reproducing apparatus S in the case where sound information presence/absence determination is made by using internal information, particularly, information of an average sound volume level of contents-data recorded on the DVD 2 will be described. In the third embodiment, description overlapping the first embodiment will be omitted.

FIG. 6 is a flowchart showing reproducing process of the information reproducing apparatus S (system controller 18) in the third embodiment.

Since the process of step S31 in FIG. 6 is similar to that in step S1 in FIG. 3, its description will be omitted.

In process of step S32, the system controller 18 determines whether information indicative of an average sound volume level of sound information in contents-data can be obtained or not from, for example, the video manager information VMGI. If the information can be obtained (Y in step S32), the information indicative of the average sound volume level is obtained (step S33). On the other hand, in the case where information indicative of the average sound volume level of contents-data cannot be obtained (N in step S32), that is, in the case where the information cannot be obtained and the sound information presence/absence determination cannot be made, the system controller 18 shifts to the menu screen display process in step S37 (in a manner similar to the first embodiment).

The average sound volume level is, for example, an average value of sound volume levels of all of contents-data (sound information) recorded on the DVD 2. For example, in the case where sound information is compressed in the Dolby digital (trademark) AC-3 form and recorded, information indicative of the average sound volume level is stored in the DVD 2 as dialog standardization (for standardizing sound output levels of various kinds of optical discs to avoid complication of adjusting a sound volume each time an optical disc is changed) , and the system controller 18 can obtain the information indicative of the average sound volume level.

At the average sound volume level, for example, as for contents of music and so on, sound is output continuously at a high sound volume level. Consequently, it can be said that the average sound volume level is relatively high. As for contents of movies and so on, sound of speeches or the like is output continuously with a small sound volume. Consequently, it can be said the average sound volume level is relatively low. Therefore, by setting a threshold between the average sound volume level of contents of music and the like and that of contents of movies and the like, whether contents-data recorded on the DVD 2 is contents of music or not can be determined.

The system controller 18 makes the sound information presence/absence determination on the basis of the obtained average sound volume level (step S34). More concretely, the system controller 18 determines whether the average sound volume level is equal to or higher than thepresetthresholdornot. If it is equal to the threshold or more, the system controller 18 determines that the contents-data includes music information as sound information desired by the user (Y in step S34), and shifts to step S37 (alternately, the system controller 18 may skip the menu screen display process in step S37 and shift to step S38 without displaying the menu screen).

In the process of step S37, a process similar to the menu screen display process in step 7 in FIG. 3 is executed. Subsequently, in the instruction input skip process in step S38, a preset reproducing procedure is obtained without waiting for instruction input from the user. For example, a reproducing procedure stored in the storage 19 (for example, reproduction in order of title numbers) is obtained. In a manner similar to the first embodiment, by transmitting identification information to the server 32, the reproduction procedure may be obtained from the server 32.

In the reproduction control process shown in step S39, the system controller 18 executes a process of controlling the reproducing operations of components such as the optical pickup 4 in order to reproduce contents-data in accordance with the obtained reproduction procedure in a manner similar to the first and second embodiments.

On the other hand, when the average sound volume level is not equal to or higher than the threshold (N in step S34), the system controller 18 shifts to step S35, executes processes similar to those of steps S7 and S8 shown in FIG. 3 in steps S35 and S36, and performs reproduction control process shown in step S39.

As described above, according to the third embodiment, also in the case where the user's instruction input is necessary on, for example, the menu screen at the time of reproducing contents-data, whether sound information desired by the user is included in the contents-data or not is determined by using the average sound volume level of sound information. If the sound information is included, the sound information desired by the user can be automatically reproduced in accordance with a preset reproduction procedure without waiting for the instruction input from the user.

Therefore, in a manner similar to the first embodiment, the user can handle an optical disk such as the DVD like a CD-DA on which music information is, for example, recorded without performing a complicated operation.

Moreover, the sound information is automatically reproduced without waiting for the instruction input from the user only in the case where sound information desired by the user is included in the contents-data. Thus, the user does not give an instruction input only to an optical disk on which sound information desired by the user is recorded and can give an instruction input to the other optical discs.

Further, according to the third embodiment, by using the average sound volume level as recording information of the DVD 2, sound information desired by the user can be more easily and promptly determined.

The case where the average sound volume level is in advance recorded on the DVD 2 has been described, as an example in the third embodiment. Alternately, it is also possible, for example, to measure an average sound volume level at the time of reproducing contents-data recorded on the DVD 2 and store the measured level so as to be associated with identification information such as the video manager information VMGI into the storage 19. With the configuration, in the case where contents-data is reproduced from a similar DVD 2 after the average sound volume level is stored, the sound information presence/absence determination shown in step S34 can be made.

### Fourth Embodiment

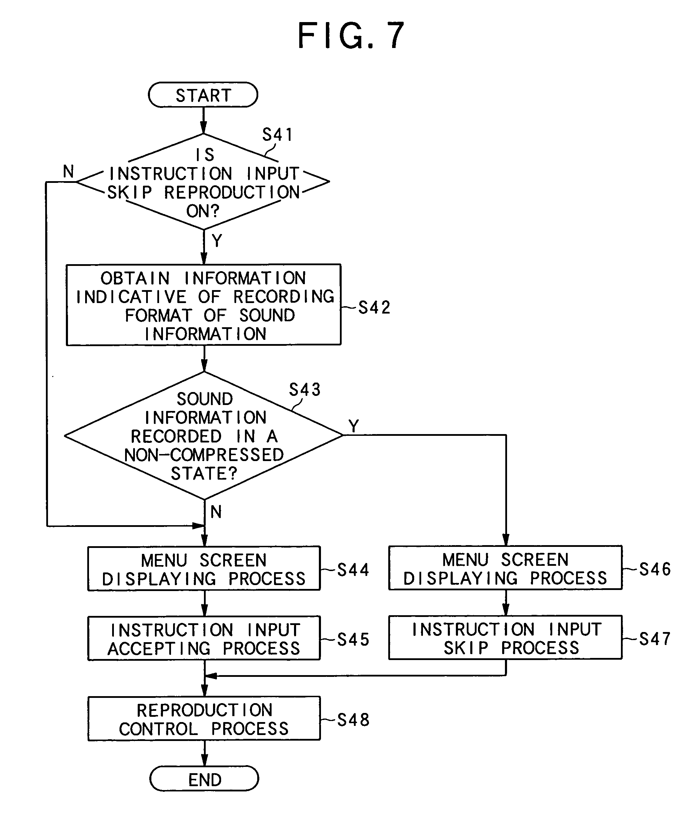

In a fourth embodiment, referring to FIG. 7, reproducing process of the information reproducing apparatus S in the case where sound information presence/absence determination is made by using internal information, particularly, information indicative of whether sound information is recorded in a non-compressed state or not will be described. In the fourth embodiment, description overlapping the third embodiment will be omitted.

FIG. 7 is a flowchart showing reproducing process of the information reproducing apparatus S (system controller 18) in the fourth embodiment.

Since the process of step S41 in FIG. 7 is similar to that in step S1 in FIG. 3, its description will be omitted.

In process of step S42, the system controller 18 obtains information indicative of a sound information recording format on the basis of, for example, the video manager information VMGI.

The system controller 18 makes sound information presence/absence determination on the basis of the obtained information indicative of the sound information recording format (step S43). More concretely, the system controller 18 determines whether sound information is recorded in a non-compressed state in the DVD 2 or not. In the case where the sound information is recorded in the non-compressed state (for example, in the linear PCM form), the system controller 18 determines that music information is included as sound information desired by the user in the contents-data (Y in step S43) and shifts to step S46 (alternately, the system controller 18 may skip a menu screen display process in step S46 and shift to step S47 without displaying the menu screen). On the other hand, in the case where sound information is not recorded in the non-compressed state (for example, in the linear PCM form) (N in step S43), the system controller 18 shifts to step S44.

With respect to contents of music and so on, sound is output in a high quality so that sound information is often recorded in a non-compressed state (for example, in the linear PCM form). Therefore, if it is determined whether sound information is recorded in a non-compressed state on the DVD 2 or not, whether music information is included as sound information to be reproduced in contents-data or not can be determined.

Since processes in steps S44 to S48 are similar to those in steps S35 to S39 in FIG. 6, their description will be omitted.

As described above, according to the fourth embodiment, also in the case where the user's instruction input is necessary on, for example, the menu screen at the time of reproducing contents-data, whether sound information desired by the user is included in the contents-data or not is determined by using the information indicative of the sound information recording format. If the sound information is included, the sound information desired by the user can be automatically reproduced in accordance with a preset reproduction procedure without waiting for the instruction input from the user.

Therefore, in a manner similar to the first and other embodiments, the user can handle an optical disk such as the DVD, for example, like a CD-DA on which music information is recorded without performing a complicated operation.

Moreover, the sound information is automatically reproduced without waiting for the instruction input from the user only in the case where sound information desired by the user is included in the contents-data. Consequently, the user does not give an instruction input only to an optical disk on which sound information desired by the user is recorded and can give an instruction input to the other optical discs.

Further, according to the fourth embodiment, by using information indicative of the sound information recording format, sound information desired by the user can be easily and promptly determined.

Alternately, the user may set any one of the sound information presence/absence determinations in the first to fourth embodiments into the storage 19 by operating the operation unit 20, and whether sound information to be reproduced is included in contents-data or not may be determined by the set sound information presence/absence determination.

Although some examples of the sound information presence/absence determining method have been described in the foregoing embodiments, the invention is not limited to the methods. The invention can be applied to any method as long as the method can determine whether sound information to be reproduced is included in contents-data or not.

In the foregoing embodiments, the selection instruction input of the operation selection item on the menu screen has been described as an example of the instruction input from the user, which is necessary at the time of reproducing contents-data. However, the invention is not limited to the method, but can also be applied to the case where a contents-data reproduction standby mode is set if there is no instruction input from the user via the operation unit 20 even if the menu screen is not displayed on the display screen of the monitor.

Although a DVD-Video has been described above as an example of a recording medium in the foregoing embodiments, the invention is not limited to the DVD-Video. The invention can be also applied to recording media such as a DVD-Audio, a Video-CD, and the like.

It should be understood that various alternatives to the embodiments of the invention described herein may be employed in practicing the invention. Thus, it is intended that the following claims define the scope of the invention and that methods and structures within the scope of these claims and their equivalents be covered thereby.

## Claims

1. Aninformationreproducingapparatus, **characterized in that** it comprises:
a reproducing device which reproduces program information recorded on a recording medium(2); and
a control device (18) which, when a user's instruction is necessary at the time of reproducing said program information, requests the user to input the necessary instruction, waits for the instruction from the user and, controls reproducing operation of said reproducing device in response to the instruction from the user at the time of input of the instruction,
wherein said control device(18) determines whether sound information desired by the user is included in said program information or not and, when it is determined that the sound information is included in the program information, controls the reproducing operation of said reproducing device in accordance with a preset reproducing procedure without waiting for said instruction input from said user.

2. The information reproducing apparatus according to claim 1, wherein when a user's instruction is necessary at the time of reproducing said program information, said control device (18) displays a menu screen which urges the user to input said necessary instruction on a display screen to request the user to input said necessary instruction.

3. The information reproducing apparatus according to any one of claims 1 or 2, wherein said control device (18) obtains identification information corresponding to said program information and also information indicative of the contents of program information corresponding to said obtained identification information and, on the basis of the information indicative of the contents of the program information, determines whether said sound information is included in the program information recorded on said recording medium(2) or not.

4. The information reproducing apparatus according to claim 3, further comprising a database(19) in which information indicative of the contents of program information and identification information corresponding to the program information is stored while being associated with each other,
wherein said control device (18) obtains information indicative of the contents of said program information from said database(19).

5. The information reproducing apparatus according to any one of claims 1 or 2, further comprising a communication device which is connected via a network (31) to a server (32) having a database in which information indicative of the contents of program information and identification information corresponding to the program information is stored while being associated with each other,
wherein said control device (18) obtains information indicative of the contents of said program information from said database in said server.

6. The information reproducing apparatus according to any one of claims 4 or 5, wherein a reproduction procedure according to the program information is stored while being associated with identification information corresponding to said program information in said database(19) and
when it is determined that said sound information is included in the program information recorded on said recording medium(2), said control device(18) obtains a reproduction procedure corresponding to the program information from said database and controls reproducing operation of said reproducing device in accordance with the reproduction procedure.

7. The information reproducing apparatus according to any one of claims 1 or 2, wherein when an average sound volume level of said program information can be obtained, said control device (18) obtains the average sound volume level and determines whether said sound information is included in the program information or not is determined on the basis of the average sound volume level.

8. The information reproducing apparatus according to claim 7, wherein said control device(18) determines whether said average sound volume level is equal to or higher than a predetermined threshold or not, and in the case where it is determined that said average sound volume level is equal to or higher than the threshold, said control device determines that said sound information is included in said program information.

9. The information reproducing apparatus according to any one of claims 1 or 2, wherein said control device (18) determines whether sound information is recorded in a non-compressed state in said recording medium or not, and when it is determined that the sound information is recorded in the non-compressed state, said control device determines that said sound information is included in said program information.

10. The information reproducing apparatus according to any one of claims 1 to 9, wherein said sound information is music information,
when it is determined that said music information is included in said program information, said control device(18) controls reproducing operation of said reproducing device so that said music information is reproduced in order of numbers in accordance with said reproducing procedure without waiting for said instruction input from said user.

11. The information reproducing apparatus according to any one of claims 1 to 10, wherein when whether said sound information is included in said program information or not cannot be determined, said control device (18) controls reproducing operation of said reproducing device in accordance with a preset reproduction procedure without waiting for said instruction input from said user.

12. The information reproducing apparatus according to any one of claims 1 to 11, further comprising a setting device which makes an on/off setting of determining whether said sound information is included in said program information or not,
wherein when said setting of the determination is off, if an instruction of the user is necessary at the time of reproducing said program information, without determining whether said sound information is included or not, said control device (18) requests the user to input the necessary instruction, waits for the instruction from the user and, when the instruction is input, controls reproducing operation of said reproducing device in accordance with the instruction.

13. An information reproducing method, **characterized in that** it comprises the processes of: when a user's instruction is necessary at the time of reproducing program information recorded on a recording medium (2), requesting the user to input the necessary instruction, waiting for the instruction from the user, and when the instruction is input, reproducing said program information in accordance with the instruction, comprising the processes of:
determining whether sound information desired by the user is included in said program information or not and, when it is determined that said sound information is included in the program information, reproducing said program information in accordance with a preset reproducing procedure without waiting for said instruction input from said user.

14. A recording medium on which information reproduction processing program is computer-readably recorded, **characterized in that**:
said information reproduction processing program, makes a computer (18) which requests the user to input a necessary instruction when the user's instruction is necessary at the time of reproducing program information recorded on a recording medium(2), waits for the instruction from the user and, when the instruction is input, reproduces said program information in accordance with the instruction, function so as to determine whether sound information desired by the user is included in said program information or not and, when it is determined that said sound information is included in the program information, reproduce said program information in accordance with a preset reproducing procedure without waiting for said instruction input from said user.
